# FASCICULE DE BREVET EUROPEEN

(11) **EP 3 063 697 B1**
(45) Date de publication et mention de la délivrance du brevet: **06.04.2022**
(21) Numéro de dépôt: 14789264.0
(22) Date de dépôt: 24.10.2014
(51) Int. Cl.: G06K 7/00, H05K 1/02, G06F 21/86, H05K 3/14, H05K 3/24, B23K 101/42, H05K 3/12

(54) **ASSEMBLAGE DE LECTURE DE CARTE À MÉMOIRE COMPRENANT DES PROTECTIONS ANTI-INTRUSION**
SPEICHERKARTENLESEANORDNUNG INKLUSIVE INTRUSIONSSCHUTZ
MEMORY CARD READING ASSEMBLY INCLUDING ANTI-INTRUSION PROTECTION

(30) Priorité: 30.10.2013 FR 1360602
(43) Date de publication de la demande: 07.09.2016
(73) Titulaire: Banks and Acquirers International Holding, 75015 Paris (FR)
(72) Inventeur: PAVAGEAU, Stéphane, F-26600 La Roche De Glun (FR); LAMBERT, Xavier, F-92500 Rueil Malmaison (FR)
(74) Mandataire: Vidon Brevets & Stratégie
(86) Numéro de dépôt international: PCT/EP2014/072821
(87) Numéro de publication internationale: WO 2015/062981

(56) Documents cités:
- EP-A1- 1 927 931
- EP-A1- 2 241 997
- DE-B3-102009 026 466
- JP-A- 2007 281 274
- US-A1- 2008 001 307
- RAFAL WRONA ET AL: "Resistance of BGA Contacts During Reliability Tests", ELECTRONICS TECHNOLOGY, 30TH INTERNATIONAL SPRING SEMINAR ON, IEEE, PI, 1 May 2007 (2007-05-01), pages 162-166, XP031203626, ISBN: 978-1-4244-1217-4
- RAINER DUDEK ET AL: "Fatigue Life Prediction and Analysis of Wafer Level Packages with SnAgCu Solder Balls", 1ST ELECTRONICS SYSTEMINTEGRATION TECHNOLOGY CONFERENCE, IEEE, PI, 1 September 2006 (2006-09-01), pages 903-911, XP031008487, ISBN: 978-1-4244-0552-7

## Description

### 1. Domaine de l'invention

L'invention se situe dans le domaine de l'électronique et plus particulièrement le domaine relatif à la protection de signaux transitant dans un circuit, dans une tête de lecture magnétique, ou encore à la protection des billes d'une matrice de billes (de l'anglais « Bail Grid array » BGA) correspondant à un boîtier de circuit intégré destiné à être soudé sur un circuit imprimé.

L'invention vise donc une application dans le domaine des terminaux comprenant des lecteurs de cartes à mémoire ou des lecteurs à têtes de lecture magnétique ou comprenant un boîtier BGA.

L'invention a comme objet un terminal de lecture de cartes à mémoire comprenant un connecteur de cartes à mémoire (CAM) destiné à être inséré dans le terminal de lecture de cartes à mémoire. Un tel terminal comprend donc un lecteur de cartes à mémoire et peut être un terminal de paiement ou encore un terminal d'identification.

### 2. Art Antérieur

Les terminaux de lecture de cartes à mémoire, à têtes de lecture magnétique, ou encore comprenant un boitier BGA comprennent, outre un lecteur de cartes à mémoire, un certain nombre de composants tels qu'un clavier, un écran, un ou plusieurs processeurs, de la mémoire, une source d'alimentation électrique.

Depuis plusieurs années, ces terminaux ont vu leurs fonctions multipliées. Ceci est particulièrement vrai pour les terminaux de paiement.

Ainsi, outre la fonction de paiement, les terminaux embarquent des fonctions de communication en réseau, des fonctions de détection de cartes à mémoire sans contact (de l'anglais « *contactless* »), des fonctions de gestion de coupons (par exemple des coupons de fidélité), etc.

En plus de la multiplication de telles fonctions auxiliaires, les terminaux doivent en plus être résistants aux diverses attaques ou tentatives de fraudes dont ils sont fréquemment l'objet. Afin d'obtenir une homogénéité de la résistance des terminaux aux attaques, des normes internationales ont été édictées. Dans le domaine du paiement, par exemple, la norme PCI PED (de l'anglais « *Payment Card Industry* - *Pin Entry Device »)* édicte des exigences en matière d'intrusion et de détection des tentatives d'attaques sur les terminaux. Il ne s'agit pas de la seule norme en vigueur.

Cependant, du fait de ces normes, les terminaux, qui étaient antérieurement peu protégés, laissent progressivement la place à des terminaux de plus en plus sécurisés. Parmi les points de sécurisation des terminaux, les industriels du secteur veillent plus particulièrement à la protection du lecteur de cartes à mémoire, ou encore des lecteurs à têtes de lecture magnétique, et plus généralement à protéger les signaux sensibles du terminal de paiement.

Par exemple, le lecteur de cartes à mémoire, en effet, reste un maillon relativement faible du terminal de lecture de carte à mémoire. Ceci est dû au fait que le lecteur de cartes à mémoire comprend une fente d'insertion de la carte à mémoire, cette fente rendant l'intérieur du terminal accessible depuis l'extérieur.

Plus particulièrement, des attaquants cherchent à se procurer un accès au connecteur de carte à mémoire.

Le connecteur de carte à mémoire est la partie du lecteur de carte à mémoire qui entre en contact avec la puce ou le microprocesseur embarqué sur la carte à mémoire.

La demande de brevet EP 2 241 997 A1 décrit un connecteur de lecture de cartes de mémoire avec des contacts et un élément de protection en plastique qui protège ces contacts contre une quelconque intrusion.

Le brevet DE 10 2009 026466 B3 décrit aussi un connecteur de lecture de cartes de mémoire avec des contacts et un élément de protection en plastique qui protège ces contacts contre une quelconque intrusion.

La demande de brevet EP 1 927 931 A1 décrit aussi un connecteur de lecture de cartes de mémoire avec des contacts et un élément de protection en plastique qui protège ces contacts contre une quelconque intrusion.

La demande de brevet US 2008/001307 A1 décrit un chip électronique qui est protégé par un autre chip dispose au dessus et un mur consistant en brasure qui contourne le chip à protéger et empêche ainsi une quelconque intrusion.

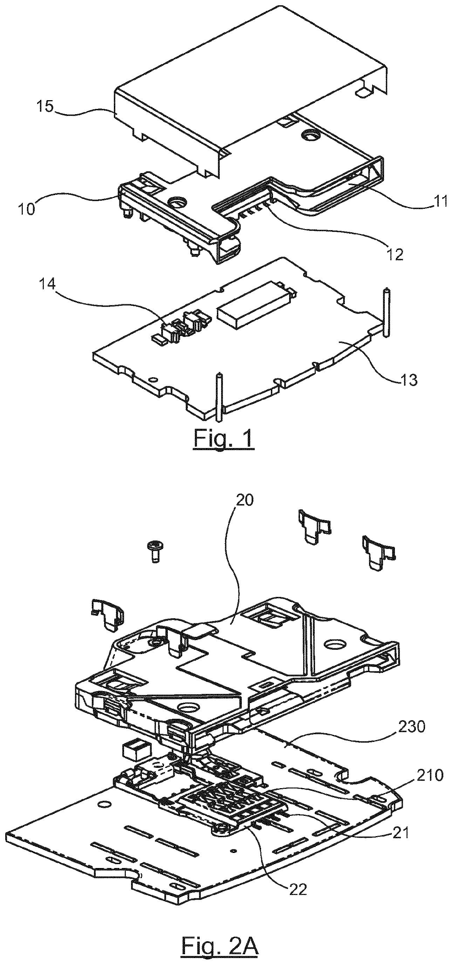

On décrit, en relation avec la figure 1, un assemblage classique d'un lecteur de cartes à mémoire. Ce lecteur de cartes à mémoire comprend un corps de lecteur de cartes à mémoire 10, comprenant une fente d'insertion d'une carte à mémoire 11. Le connecteur de carte à mémoire est directement intégré au sein du lecteur de cartes à mémoire. Il comprend des broches de connexion 12 au circuit imprimé (PCB pour « *Printed Circuit Board* » en anglais) 13 (vue partielle). Le PCB 13 comprend également des composants électroniques 14. Pour protéger le lecteur de cartes à mémoire 10, celui-ci est recouvert d'une protection complète 15, ainsi que d'une protection frontale.

Un autre assemblage est également illustré par la figure 2A.

En particulier selon cette solution, le connecteur de carte à mémoire 22 est indépendant du corps du lecteur de cartes à mémoire 20. Ainsi, selon cette proposition, le connecteur de carte à mémoire 22 n'est pas assemblé avec le corps du lecteur de cartes à mémoire 20 avant d'être assemblé au circuit imprimé (PCB) 230 du terminal de lecture. La technique décrite propose de fixer le connecteur de carte à mémoire 22 en premier sur le PCB 230, puis ensuite de fixer le corps du lecteur de cartes à mémoire 20 par-dessus le connecteur de carte à mémoire 22. En d'autres termes, on comprend que cet assemblage n'est pas du tout de même nature que l'assemblage de la figure 1 puisque le connecteur de carte à mémoire est recouvert par le corps du lecteur de cartes à mémoire qui vient en quelque sorte le protéger.

Lorsqu'un attaquant parvient à avoir accès à ce connecteur de carte à mémoire dans l'une ou l'autre des configurations décrite ci-dessus, sans que quiconque s'en aperçoive, il est alors possible d'intercepter et de lire les données qui sont échangées entre la puce ou le microprocesseur de la carte et le processeur du terminal de lecture de carte à mémoire.

En particulier, l'attaquant cherche à accéder au signal I/O transitant sur une lame en métal 210 entre la carte à mémoire (carte à puce) et le connecteur de carte à mémoire. La lame en métal 210 est constituée d'une partie flexible établissant le contact avec la carte à mémoire et une partie soudée sur le PCB 230. L'attaquant vise notamment à intercepter le signal I/O via la partie soudée au PCB 230.

Parmi les données interceptées, on peut notamment citer le code secret saisi par le client lors de la demande de code secret, qui peut être véhiculé sans cryptage sur certaines cartes à puce.

Ceci explique que de nombreux efforts ont été portés à la sécurisation du lecteur de cartes à mémoire ou selon d'autres exemples à la sécurisation de terminaux comprenant des lecteurs à têtes de lecture magnétique ou comprenant un boitier BGA.

Ainsi, par exemple, les lecteurs de cartes à mémoire ont été pourvus d'une protection avec treillis. Cette protection permet d'éviter une introduction par perçage du terminal. Lorsqu'un objet tente de pénétrer dans l'enceinte de protection, un court-circuit est produit entraînant alors une mise hors service du terminal.

Ces efforts de protection ont entrainé une complexité de fabrication importante, et le coût de fabrication a également augmenté. Actuellement, les exigences normatives en matière de sécurité sont telles qu'il est nécessaire de prévoir, pour la fabrication d'un terminal de lecture, de nombreuses étapes qui mêlent à la fois les soudures échelonnées de composants, la nécessité de disposer de composants résistants à la refusion, etc. Outre la complexité de fabrication du terminal, ces procédés rendent la maintenance des terminaux produits très complexe voire impossible, suscitant ainsi bien des difficultés pour les prestataires de services de maintenance autant que pour le fabricant du terminal de lecture de carte à mémoire.

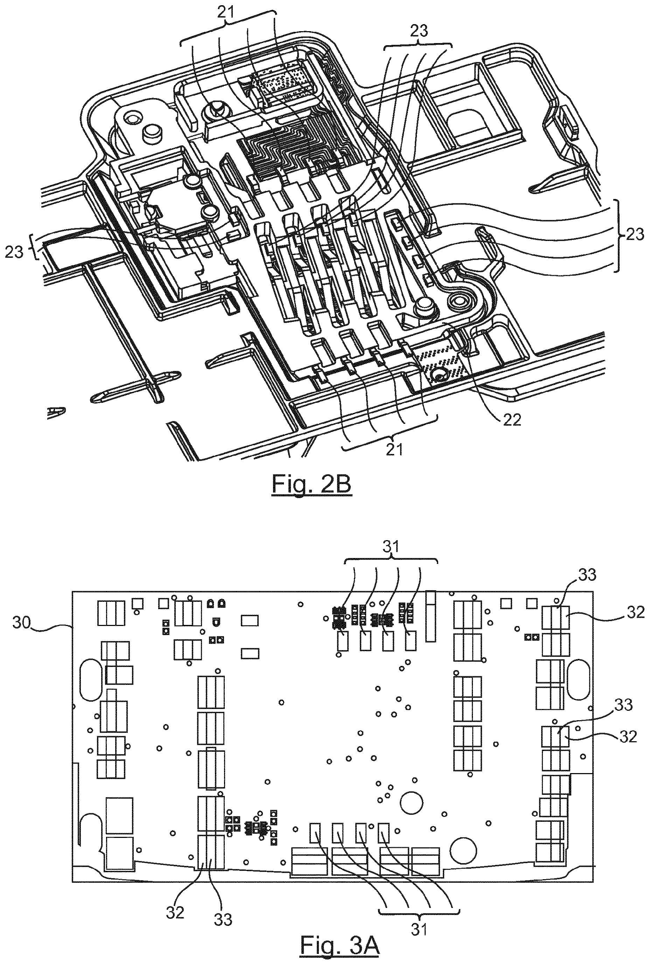

En particulier, au regard des connecteurs de carte à mémoire, des composants sont utilisés pour protéger les signaux « sensibles » qui y transitent. Plus précisément, en relation avec la figure 2B représentant un agrandissement de la configuration d'assemblage proposée en figure 2A, ces composants 23 sont disposés sur un support (généralement un circuit imprimé (PCB)) de sorte à former par juxtaposition des chicanes ou barrières physiques de protection pour rendre difficile d'accès les signaux sensibles qui transitent par exemple au sein du connecteur de carte à mémoire 22.

Une telle barrière physique de composants 23 pourrait également être utilisée dans la configuration d'assemblage classique représentée par la figure 1 pour protéger les composants électroniques 14.

En particulier, de tels signaux sensibles transitent dans des broches 21 (« pin » en anglais) du connecteur de carte à mémoire permettant d'entrer en contact avec des zones correspondantes de la carte à mémoire. Ces broches 21 sont en général des extrémités de lames ressort métalliques 210 qui se positionnent sur la surface de la carte à mémoire.

L'inconvénient de la technique actuelle réside dans la nécessité de souder ces composants 23, à proximité du signal à protéger ce qui implique parfois des défauts de soudures, ou des dessoudures de composants dommageables (constituant la barrière physique de protection, ou même encore de composants dans lesquels les signaux sensibles vont transiter) du fait d'étapes thermiques successives. Ces défauts de soudures ou dessoudures sont difficilement détectables et entraînent des difficultés d'intégration notamment lorsque l'un des composants se dessoude et devient en conséquence mobile à l'intérieur du dispositif électronique et de ce fait une cause éventuelle de dégradation de celui-ci.

A l'inverse, si les composants 23 ne sont pas soudés très proches du ou des signaux à protéger, il est nécessaire de mettre en œuvre une barrière de protection plus longue, plus large et plus haute ce qui multiplie le nombre de composants 23 à souder et les inconvénients relatifs aux soudures de tels composants.

En outre, de telles barrières physiques de protection basées sur la disposition de composants 23 présentent une mauvaise tenue aux conditions climatiques.

Par ailleurs, de tels composants 23 sont classiquement qualifiés de composants « fictifs » du fait que leur seule fonction est une protection physique des signaux sensibles de part leur disposition sur le support. Ces composants « fictifs » ne sont donc pas connectés à d'autres composants et sont donc dépourvus de fonction électronique.

Ainsi, de telles barrières physiques de protection basées sur la disposition de composants s'avère également inutilement coûteuse.

Il existe donc un besoin de fournir une architecture de support entrant dans la fabrication d'un dispositif électronique, tel qu'un connecteur de carte à mémoire ou un lecteur de cartes à mémoire, qui soit intrinsèquement sécurisée et dont la complexité et les coûts de production sont limités.

### 2. Résumé de l'invention

La technique décrite propose une solution nouvelle qui ne présente pas les inconvénients de l'art antérieur, sous la forme d'un assemblage selon la revendication 1 entrant dans la fabrication d'un dispositif électronique, ledit assemblage comprenant au moins un composant à protéger et au moins un élément tridimensionnel de hauteur au moins égale à la hauteur d'un composant électronique, ledit élément tridimensionnel étant disposé latéralement au regard dudit au moins un composant à protéger, Selon la technique décrite, un tel élément tridimensionnel est principalement constitué d'un matériau de brasage.

Il est ainsi possible d'éviter l'utilisation de composants « fictifs » dont la fonction se limitait à former une barrière physique de protection pour protéger, un connecteur de carte à mémoire, d'un accès frauduleux visant à détériorer celui-ci.

La technique décrite permet ainsi d'économiser le coût d'implémentation de tels composants « fictifs » dépourvus de fonction électronique.

Par ailleurs, la technique décrite détourne l'usage classique du matériau de brasage permettant classiquement d'établir une jonction entre deux éléments, à savoir un composant et un support correspondant généralement à un circuit imprimé.

En effet, selon la technique décrite, le matériau de brasage n'a plus une fonction de jonction, mais une fonction de protection physique de composants.

Le composant à protéger est un connecteur de carte à mémoire et/ou ses broches de connexion, pour lesquels on souhaite éviter toute perturbation des signaux qui y transitent.

Selon la technique décrite, la protection physique contre un tiers malintentionné prend donc la forme d'un élément tridimensionnel solidarisé par une extrémité au support et principalement voire exclusivement composé d'un matériau de brasage.

Une telle composition de l'élément tridimensionnel le rend apte à empêcher physiquement, à cause du volume tridimensionnel qu'il forme, l'accès d'un instrument, par exemple une fine lame métallique insérée horizontalement (dans le cas d'une carte à mémoire, sous le connecteur carte à mémoire) visant à venir se connecter aux signaux sensibles En effet, grâce à cet élément tridimensionnel la lame est détournée de sa trajectoire d'insertion et ne parvient donc pas à accéder au signal à protéger.

En d'autres termes, l'élément tridimensionnel constitué principalement, ou exclusivement, d'un matériau de brasage selon la technique décrite, joue le rôle de « mur » ou « rempart » physique de protection.

Par ailleurs, un tel élément tridimensionnel présente l'avantage de peu perturber le fonctionnement électronique des composants électroniques présents et actifs sur le support, également appelé circuit imprimé.

De tels éléments tridimensionnels de protection tirent également profit des propriétés du matériau de brasage permanent qui les constitue.

En particulier, au regard de la fragilité d'une barrière physique de protection formée d'une juxtaposition de composants fictifs, le matériau de brasage présente une bonne résistance tridimensionnelle aux conditions climatiques, notamment l'humidité, et une très bonne tenue mécanique.

Un « matériau de brasage » est également appelé « pâte à braser », « crème à braser », « brasure »...

Par la suite, il est donc à noter que ces expressions sont équivalentes et substituables.

L'avantage d'un tel matériau de brasage réside dans le fait que la température nécessaire pour qu'il s'assemble avec le support et forme l'élément tridimensionnel est inférieure à la température de fusion du support mais également à celle du connecteur de carte à mémoire à protéger. En effet, par définition, le brasage est réalisé sans fusion des bords des éléments à assembler lorsque cette technique est utilisée pour solidariser deux éléments distincts.

Ainsi, la formation de l'élément tridimensionnel de protection n'entraîne aucune dégradation thermique du connecteur de carte à mémoire à protéger ou encore du support.

Au regard d'un matériau de brasage, un matériau de soudage requiert la fusion des bords des éléments assemblés ce qui peut générer des dégradations des propriétés mécaniques et l'oxydation des éléments constitutifs du support et du support lui-même.

Par ailleurs, la diversité des matériaux de brasage disponibles sur le marché est quasiment infinie, ce qui permet une grande flexibilité de conception du support selon la technique décrite. Par exemple, il est possible d'utiliser deux matériaux de brasage distincts associés à des étapes distinctes de solidarisation de composants sur le support, ces deux étapes de solidarisation requérant des températures de solidarisation distinctes.

Les directives européennes environnementales actuelles visent à réduire l'utilisation des matières dangereuses dans les équipements électriques et électroniques, en particulier le plomb, le mercure, le cadmium, le chrome hexavalent ...

En particulier, la décision d'interdire l'utilisation du plomb est effective en France depuis le 1er juillet 2006 et des matériaux de brasage sans plomb sont préférentiellement utilisés selon la technique décrite.

De tels matériaux de brasage sans plomb selon la technique décrite sont par exemple des alliages à base d'étain d'argent et de cuivre. Les alliages à base d'étain d'argent et de cuivre SnAgCu n'ont pas de composition eutectique et présentent selon leur composition un domaine de température de fusion compris entre 217°C et 227°C (SnAg3Cu0,5 : 217-218°C, SnAg3,9Cu0,6 : 217-220°C, SnAg4Cu0,5 : 217-220°C, SnAg1Cu0,5 : 217-227°C).

Selon un aspect particulier de la technique décrite, une section de l'élément tridimensionnel, selon la hauteur dudit support, a la forme d'un disque à méplat dont le méplat repose sur ledit support.

Par exemple, l'élément tridimensionnel à la forme d'un cylindre à méplat dont le méplat repose sur ledit support.

Il est donc aisé d'identifier l'élément tridimensionnel de protection selon la technique décrite par son aspect cylindrique à méplat, et en conséquence le composant à protéger qui lui est latéralement voisin sur le support.

Avantageusement, la hauteur dudit élément tridimensionnel est au moins égale à 0,2mm.

Une telle hauteur minimum de l'élément tridimensionnel permet une protection physique en cas d'insertion d'une lame ou d'un instrument visant à dégrader le composant à protéger ou encore la liaison d'entrée sortie (I/O) de ce composant. Cette hauteur est supérieure à la hauteur standard de 150µm obtenue avec la fonction classique de jonction entre deux éléments d'un matériau de brasage

Ainsi, l'utilisation du matériau de brasage selon la technique décrite vise à faire augmenter la hauteur de dépôt au regard de l'utilisation classique de jonction, de sorte à former un élément tridimensionnel de protection jouant le rôle de barrière.

Par exemple, la hauteur de l'élément tridimensionnel est comprise entre 0,2mm et 0,3mm de sorte à protéger des composants de faibles dimensions tout en limitant l'encombrement notamment lorsque l'on cherche par exemple à intégrer un tel support dans des connecteurs de carte à mémoire (CAM) ultra-plats.

De manière optionnelle ledit élément tridimensionnel forme une ligne brisée de sorte à protéger au moins deux côtés dudit composant à protéger.

Cette variante de réalisation présente l'avantage de ne nécessiter qu'un seul élément tridimensionnel de protection pour protéger plusieurs côtés d'un composant à protéger ou encore un groupe de composants à protéger. La protection par un seul élément tridimensionnel de protection permet d'éviter de multiples solidarisations d'éléments tridimensionnels disjoints. La fabrication du support selon la technique décrite est donc simplifiée.

Selon un autre aspect, la technique décrite se rapporte également à un dispositif électronique comprenant un support selon la technique décrite tel que décrit précédemment.

Par exemple, un tel dispositif correspond à un connecteur de carte à mémoire, un dispositif électronique comprenant un microprocesseur,

La technique décrite se rapporte à un terminal de comprenant un dispositif électronique tel que décrit ci-dessus.

Un tel terminal est un terminal de lecture de carte à mémoire, notamment une carte à piste, ou tout terminal requérant la protection de signaux transitant dans un circuit, dans une tête de lecture magnétique, ou encore la protection des billes d'une matrice de billes (de l'anglais « Bail Grid array » BGA) correspondant à un boîtier de circuit intégré destiné à être soudé sur un circuit imprimé.

La technique décrite concerne également un procédé de fabrication d'un assemblage de carte à mémoire ledit assemblage comprenant au moins un connecteur de carte à mémoire à protéger.

Selon la technique décrite, ledit procédé de fabrication comprend les étapes successives suivantes:
- dépôt d'un matériau de brasage sur une surface de dépôt dudit support,
- formation d'au moins un élément tridimensionnel de hauteur au moins égale à la hauteur du connecteur de la carte à mémoire à protéger par passage en refusion dudit matériau de brasage déposé.

La technique utilisée pour le dépôt du matériau de brasage est par exemple de type « dépôt jet d'encre », par gravure, couches minces, etc. Le volume de matériau déposé sera prédéterminé en fonction de la technique de dépôt utilisée de sorte à permettre la formation ultérieure d'un élément tridimensionnel de hauteur au moins égale au connecteur de carte à mémoire à protéger.

Selon un mode de réalisation particulier, l'étape de dépôt du matériau de brasage implique l'utilisation d'un masque de dépôt également appelé masque de sérigraphie. Dans ce cas, ledit procédé de fabrication comprend les étapes successives suivantes:
- disposition sur ledit support d'un masque de dépôt d'un élément tridimensionnel de hauteur au moins égale à la hauteur d'un composant électronique, ledit masque comprenant au moins une ouverture disposée latéralement au regard de la localisation dudit au moins un composant à protéger sur ledit support,
- dépôt au travers de ladite au moins une ouverture d'un matériau de brasage une surface de dépôt dudit support,
- retrait dudit masque de dépôt,
- formation d'au moins un élément tridimensionnel de hauteur au moins égale audit au moins un composant à protéger par passage en refusion dudit matériau de brasage déposé sur ladite ouverture.

Par masque de dépôt, on entend un écran permettant une « impression par pochoir » permettant de reproduire plusieurs fois le dépôt d'éléments tridimensionnel sur une série de supports traités successivement par le procédé selon la technique décrite. La ou les ouvertures définies dans le masque de sérigraphie (réalisant un pochoir) définissent les surfaces de dépôt du matériau de brasage qui recouvrent la ou les plages du support, encore appelée(s) surface(s) du support correspondant à la surface de solidarisation, avec le support, de l'élément ou des éléments tridimensionnel(s) obtenu(s) après le passage en refusion selon la technique ici décrite.

Les avantages de ce procédé de fabrication sont les mêmes que ceux présentés en relation avec le support selon la technique décrite et vise à remplacer les barrières physiques de protection classique à base de composants fictifs par au moins un élément tridimensionnel principalement constitué d'un matériau de brasage. Ces avantages ne sont donc pas détaillés plus amplement. En particulier, un tel procédé de fabrication est simple à mettre en œuvre, et aisément industrialisable.

Selon une variante, un tel procédé de fabrication comprend une étape de réglage de ladite hauteur dudit au moins un élément tridimensionnel.

En particulier, un tel réglage de hauteur est par exemple obtenu en faisant varier le rapport entre la largeur de la surface de dépôt du matériau d'assemblage permanent (correspondant à la largeur des ouvertures du masque de sérigraphie) et la largeur de la plage du support correspondant à la surface de solidarisation, avec le support, de l'élément ou des éléments tridimensionnel(s) obtenu(s) après le passage en refusion.

En outre, selon le sens de passage (parallèle ou perpendiculaire) de la raclette permettant de déposer le matériau de brasage au regard de la longueur de l'élément tridimensionnel, l'épaisseur avant refusion peut être plus importante (une épaisseur supplémentaire due à un « bourrelet » de pâte à braser est obtenue pour une longueur de l'élément tridimensionnel perpendiculaire au regard du sens de passage), ce qui peut conduire à une épaisseur globale après refusion très importante.

Selon un mode de réalisation particulier, le rapport R entre la largeur L_{DEP} de ladite surface de dépôt dudit matériau d'assemblage permanent et la largeur Lₒ dudit élément tridimensionnel est tel que 2<R<4.

En d'autres termes, il existe un rapport R de l'ordre de trois entre la largeur de dépôt du matériau de brasage et la plage du support recouverte par l'élément tridimensionnel obtenu après le passage en refusion.

Cette précaution permet notamment d'éviter des billes de refusion qui pourraient entraver le fonctionnement des composants du support tout en ayant une hauteur d'élément tridimensionnel suffisamment élevée.

En effet, un rapport de deux entre la largeur L_{DEP} de ladite surface de dépôt dudit matériau de brasage et la largeur L_{O} dudit élément tridimensionnel obtenu après le passage en refusion, ne permettrait pas d'obtenir un élément tridimensionnel de protection de hauteur efficace pour « barrer » la trajectoire d'insertion d'un instrument frauduleux.

Par ailleurs, un rapport de quatre ou cinq entre la largeur L_{DEP} de ladite surface de dépôt dudit matériau de brasage et la largeur L_{O} dudit élément tridimensionnel augmente le risque d'apparition de billes conductrices de matériau d'assemblage.

En effet, la présence de billes est dommageable, d'une part car leur localisation est aléatoire et leur tenue sur la carte est assez réduite, et d'autre part du fait que ces billes sont conductrices ce qui entraîne que durant la vie du produit (vibration, chocs, climatique) ces billes peuvent se désolidariser du circuit, et venir en contact avec les composants actifs entraînant des court-circuits.

Le rapport R entre la largeur L_{DEP} de ladite surface de dépôt dudit matériau de brasage et la largeur L_{O} dudit élément tridimensionnel est donc tel que 2<R<4.

Par exemple, la largeur dudit élément tridimensionnel obtenu après le passage en refusion est de l'ordre de 1mm et ladite largeur de dépôt dudit matériau de brasage est de l'ordre de 3mm.

### 3. Figures

D'autres caractéristiques et avantages de la technique décrite apparaîtront plus clairement à la lecture de la description suivante d'un mode de réalisation préférentiel, donné à titre de simple exemple illustratif et non limitatif, et des dessins annexés, parmi lesquels :
- la figure 1, déjà présentée, expose l'architecture classique d'un lecteur de cartes à mémoire,
- les figures 2A et 2B, déjà présentées, exposent respectivement l'architecture d'une autre configuration d'assemblage de lecteur de cartes à mémoire et une barrière de protection physique d'un composant à protéger.
- Les figures 3A à 3C illustrent respectivement un support selon la technique décrite après dépôt d'un matériau de brasage pour former un élément tridimensionnel protégeant physiquement un composant à protéger, ce support finalisé après la dernière étape de fabrication du procédé selon la technique décrite, et l'assemblage d'un terminal selon la technique décrite;
- La figure 4 illustre le procédé de fabrication selon la technique décrite ;
- les figures 5A et 5B illustrent respectivement l'étape de dépôt et l'étape de formation du procédé de fabrication selon la technique décrite.

### 5. Description détaillée de l'invention

### 5.1. Rappel du principe de l'invention.

Le principe général de la technique décrite consiste à modifier la constitution d'un support comprenant au moins un composant à protéger, en détournant l'usage classique d'un matériau de brasage pour former un élément tridimensionnel dont la hauteur est au moins égale à la hauteur d'un composant électronique pour jouer le rôle de barrière physique de protection du composant à protéger.

De tels éléments tridimensionnels de protection sont donc formés principalement d'un matériau de brasage peu coûteux et facilement disponible du fait qu'il est également utilisé classiquement pour solidariser un composant électronique sur le support.

Ainsi, il n'est pas évident de détourner la fonction d'un matériau utilisé classiquement pour solidariser deux éléments, à savoir par exemple un composant et le support, afin de l'utiliser directement pour former des éléments de protection tridimensionnels.

Le principe général de la technique décrite est décrit en relation avec la figure 3A représentant le support après dépôt du matériau de brasage

Ainsi, cette représentation du support selon la technique décrite correspond à une « image » du support entre l'étape de dépôt et l'étape de formation du procédé de fabrication du support tel que détaillé ci-après. Ainsi, cette représentation correspond à la superposition 30 d'un masque (encore appelé stencil ou écran de sérigraphie), avec le support.

Sur la figure 3A, les composants à protéger sont représentés par des rectangles 31 sur la superposition 30 du masque et du support correspondant à un circuit imprimé (PCB pour *« Printed Circuit Board* » en anglais) également appelée carte électronique.

Selon le mode de réalisation représenté par la figure 3A, huit rectangles correspondants aux plages de soudure de composants actifs sont représentés. Ces huit rectangles 31 correspondent, par exemple, aux huit broches de connexion 21 du connecteur de carte à mémoire 22 tel que représentée selon la figure 2B. Parmi ces huit broches, figure notamment une broche sur laquelle le signal I/O à protéger est accessible.

En outre, la superposition 30 du masque et du support comprend, après dépôt du matériau de brasage des couches également appelées surfaces de dépôt de ce matériau de brasage au niveau des ouvertures 32 du masque de sérigraphie superposées sur les plages du support 33 correspondant à la surface de solidarisation, avec le support, des éléments tridimensionnels obtenus après le passage en refusion. De telles couches de matériau de brasage (encore appelé crème ou pâte à braser) présentent après dépôt une largeur plus importante, et préférentiellement environ trois fois plus importante, que la largeur de la plage du support 33 recouverte par l'élément tridimensionnel obtenu après le passage en refusion selon la technique ici décrite sur lesquelles elles sont déposées, afin d'éviter la génération de billes conductrices lors du passage en refusion, ces billes conductrices pouvant dégrader le fonctionnement des composants au sein du support.

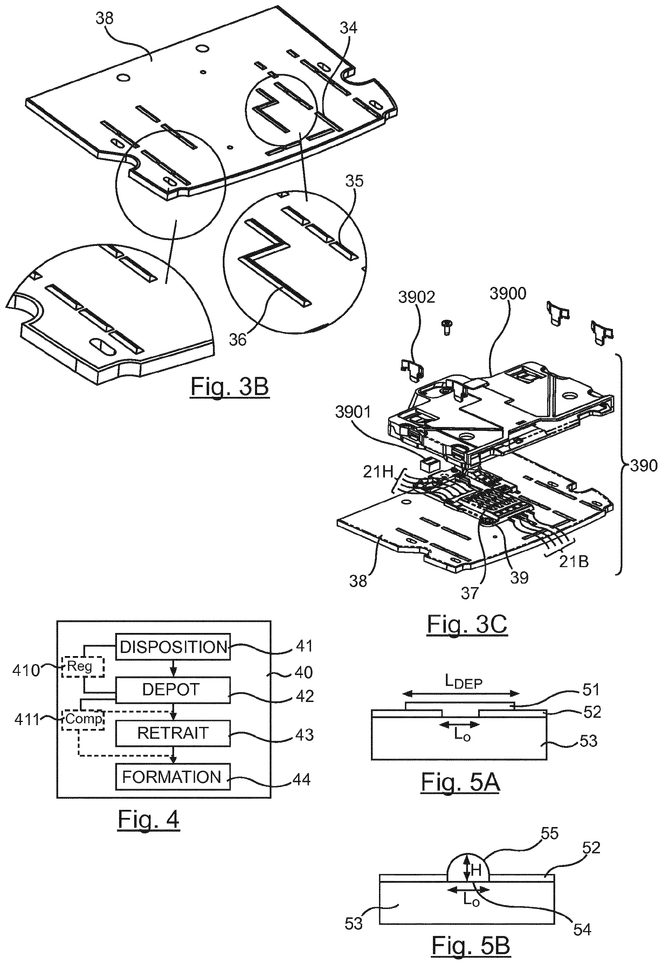

Après retrait du masque de sérigraphie et passage en refusion et, on obtient le support 38 finalisé selon la technique décrite tel que représenté sur la figure 3B. Ainsi, le support 38 selon la technique décrite comprend des éléments tridimensionnels 34, 35 et 36 de protection physique de composants à protéger qui correspondent selon l'illustration de la figure 3C aux broches de connexions 21_{H} du connecteur de carte à mémoire indépendant 39 du terminal de lecture de carte à mémoire 390 obtenu après assemblage du corps de lecteur de carte à mémoire 3900, avec le support 38 obtenu selon la technique décrite.

La connexion entre ces deux éléments est réalisée par l'intermédiaire d'un connecteur élastomère réalisant une pression permanente, par exemple de type Zebra (Marque déposée) (3901) tel que représenté sur la figure 3C.

En outre, le corps de lecteur de carte à mémoire comprend également des ouvertures permettant l'insertion de pions métalliques d'ancrage 3902, fixant, dans le corps de lecteur de carte à mémoire 3900, le support 38 obtenu selon la technique décrite, ces pions métalliques étant soudés avec de la pâte (également appelée crème) à braser. De tels pions métalliques d'ancrage maintiennent le connecteur lors des insertions répétées d'une carte à mémoire dans le lecteur de carte à mémoire. Ces pions métalliques d'ancrage peuvent également présenter une forme particulière, adaptée d'une part pour remplir une fonction de guidage de la carte à mémoire dans le lecteur et d'autre part pour réaliser, si besoin, une décharge électrostatique des arêtes de la carte insérée.

Chacun de ces éléments tridimensionnels 34, 35, 36 sont disposés latéralement au regard du composant à protéger à savoir les broches de connexions 21_{H} du connecteur de carte à mémoire, de sorte à les « défendre physiquement » selon au moins un côté tel un mur ou un rempart, contre une éventuelle intrusion malintentionnée.

L'avantage de la composition de l'élément tridimensionnel à base de matériau de brasage est qu'il permet une grande flexibilité de forme et de longueur d'éléments tridimensionnels protecteurs.

Ainsi, il est possible d'avoir des éléments tridimensionnels sous forme de ligne brisée tel l'élément 36 qui permet de protéger selon un angle les composants à protéger, mais également des éléments de diverses longueurs telle que la grande longueur de l'élément tridimensionnel 34 qui permet de remplacer quatre composants fictifs de l'art antérieur, ou encore la petite longueur de l'élément tridimensionnel 35 qui permet d'obtenir une barrière de protection apte à être insérée dans les logements des lames ressort métalliques 37 qui se positionnent sur la surface de la puce.

Les éléments tridimensionnels 34 à 36 ont la forme caractéristique d'un cylindre à méplat dont le méplat repose sur le support. En d'autres termes, la section selon la hauteur de l'élément tridimensionnel à la forme d'un disque à méplat.

En effet, cette forme caractéristique de l'élément tridimensionnel de protection selon la technique décrite est obtenue lors du passage en refusion. En effet, la capillarité du matériau de brasage correspondant selon l'exemple illustré dans les figures 3A et 3B à un matériau de brasage, produit un regroupement de celui-ci au niveau des plages du support 33, et éventuellement une rétractation de son volume. En particulier, au regard de la largeur de dépôt de la couche de matériau de brasage dans l'ouverture 32 du masque de dépôt sur la figure 3A représentant le support après dépôt du matériau de brasage, l'élément tridimensionnel obtenu après passage en refusion présente une largeur sensiblement proche de la largeur des plages du support 33.

La forme résultant de cette rétraction par passage en fusion présente de manière caractéristique, une section selon la fauteur du support, en forme de disque à méplat et une hauteur H au moins égale à celle d'un composant électronique de l'ordre de 0,2mm à 0,3mm afin de protéger physiquement tout en permettant une intégration dans un connecteur ultra-plat. Par exemple, une hauteur H de 0,5 à 0,6mm est obtenue pour un élément tridimensionnel dont la longueur est perpendiculaire au regard du sens de passage de la raclette de dépôt de matériau de brasage

L'obtention d'une telle hauteur de 0,5 à 0,6 mm est notamment associée la formation du « bourrelet » de pâte à braser précédemment mentionné.

Ainsi, une barrière de protection correspondant à l'élément tridimensionnel principalement constitué d'un matériau de brasage est facilement identifiable au regard des composants fictifs utilisés selon l'art antérieur.

### 5.2. Description du procédé de fabrication

On présente en relation avec la figure 4, le procédé de fabrication 40 d'un support selon la technique décrite.

Un tel procédé comprend les étapes successives suivantes:
- disposition 41 sur le support d'un masque de dépôt d'un élément tridimensionnel de hauteur au moins égale à la hauteur du connecteur de carte à mémoire le masque comprenant au moins une ouverture 32 disposée latéralement au regard de la localisation dudit au moins un composant à protéger sur ledit support,
- dépôt 42 au travers de l'ouverture 32 d'un matériau de brasage sur le support,
- retrait 43 dudit masque de dépôt.
- formation 44 d'au moins un élément tridimensionnel de hauteur au moins égale audit au moins un connecteur de carte à mémoire par passage en refusion dudit matériau de brasage déposé sur ladite ouverture 32,

Plus précisément, le procédé revient à fabriquer des barrières de protection physique du connecteur de carte à mémoire à protéger par dépôt de la pâte à braser, selon un procédé de sérigraphie (« *screen printing* » en anglais) et également d'« over-printing » en anglais, correspondant au fait que le dépôt de crème à braser est environ trois fois plus large que la largeur du support recouverte par l'élément tridimensionnel qui sera obtenu après le passage en refusion selon la technique ici décrite.

Ainsi, on dispose 41 tout d'abord sur le support que l'on souhaite améliorer un masque également appelé écran de sérigraphie ou encore stencil.

Ce masque comprend des ouvertures 32, telles que représentées en relation avec la figure 3A. Ces ouvertures 32 correspondent aux zones de dépôt.

Les masques également appelés stencils ou encore écran de sérigraphie sont parfois élaborés à partir de feuilles polyester ou d'alliages cuivrés.

Ces matériaux sont de moins en moins utilisés car moins fiables et plus facilement détériorés.

À titre d'alternative, on utilise des tôles dans un inox spécifique dont le coût est raisonnable tout en offrant une bonne stabilité et durée dans le temps.

Parfois, il peut être nécessaire de recourir à d'autres matières, notamment si les ouvertures sont vraiment très petites, ou s'il est nécessaire d'avoir un dépôt plus important que ce qui serait autorisé avec une tôle inox. Dans ce cas, on recourt par exemple à une tôle en nickel qui présente une adhérence sur les parois beaucoup plus faible et permet donc d'avoir un rapport surface sur épaisseur plus faible. La contrepartie est le coût très élevé de ces feuilles de nickel ce qui en limite l'utilisation.

Il existe également des stencils « point de colle », moins complexes mais présentant des inconvénients similaires aux types de stencils précédent. La différence essentielle est l'épaisseur de la tôle qui est généralement de 250µm.

La découpe des ouvertures 32 dans l'écran de sérigraphie est par exemple effectuée à partir de rayons laser, par exemple générés à partir de diodes laser qui permettent une découpe fine et une mise en œuvre rapide.

Le profil de l'ouverture 32 est souvent de forme trapézoïdale dont la base est au contact du circuit, ceci pour favoriser le démoulage.

Lors du dépôt 42 et tel qu'illustré par la figure 5A, la pâte à braser 51 est poussée dans les ouvertures du masque (non représenté sur la figure 5A) par une raclette pour être déposée sur la surface du support 53. Le support 53 est recouvert d'un vernis 52, et présente des plages de support, de largeur Lₒ, « épargnées » de vernis, recevant le matériau de brasage et correspondant à la surface de solidarisation, avec le support, des éléments tridimensionnels obtenus après le passage en refusion une fois soudée.

Le volume de crème à braser à déposer est par exemple déterminé par la surface de la plage d'accueil et l'épaisseur du stencil qui est généralement de 150µm. Si le dépôt n'est pas suffisant, l'élément tridimensionnel protecteur ne sera pas solidarisé correctement, s'il est trop important, la pâte peut déborder et provoquer des ponts entre des plages.

La qualité du dépôt dépend de nombreux facteurs, le grain de la pâte, sa viscosité, la qualité du support, son épaisseur et la force de rétention sur ses parois, les dimensions de l'ouverture, les courbes de température durant le passage au four entre autres.

En outre, l'épaisseur du stencil est également déterminante. L'adhérence de la pâte sur les parois dépend du rapport entre la surface de l'ouverture et l'épaisseur de la matière

Ainsi, il est optionnellement possible d'agir sur ces facteurs pour régler (410) la hauteur de l'élément tridimensionnel du support.

Le réglage REG 410 de cette hauteur consiste, par exemple, à ajuster le rapport entre la largeur d'ouverture 32 dans l'écran de sérigraphie correspondant à la largeur de dépôt L_{DEP} du matériau de brasage et la largeur Lₒ de la plage du support recouverte par l'élément tridimensionnel obtenu après le passage en refusion.

Avantageusement, la largeur de dépôt L_{DEP} du matériau de brasage est trois fois plus grande que la largeur Lₒ la plage du support recouverte par l'élément tridimensionnel obtenu après le passage en refusion.

Un tel rapport assure une hauteur suffisante de l'élément tridimensionnel, par exemple entre 0,2mm et 0,3mm pour une largeur de dépôt L_{DEP} du matériau de brasage égale à 3mm et une largeur L_{O} la plage du support recouverte par l'élément tridimensionnel obtenu après le passage en refusion de 1mm, pour qu'il joue le rôle de protection de composants sensibles.

Puis, le retrait (43) (ou encore démoulage) du masque de dépôt est effectué.

Une fois la pâte à braser déposée on dépose COMP (411), selon une option, les composants à protéger. Déposer les composants à protéger après le dépôt de pâte à braser permet d'éviter toute projection de pâte à braser sur ces composants et donc leur dégradation potentielle par ce matériau. Un tel dépôt des composants à protéger peut être effectué optionnellement avant ou après retrait du masque de dépôt.

Enfin, le procédé de fabrication met en œuvre la formation (44) des éléments tridimensionnels par passage en refusion dans un four de refusion, pour obtenir le support apte à être utilisé pour fabriquer un dispositif électronique tel qu'un terminal (390) de lecture de carte à mémoire dont un exemple est représenté sur la figure 3B.

Optionnellement, il est possible de régler à nouveau la hauteur de l'élément tridimensionnel mécaniquement. En effet, il est possible de réaliser une retouche manuelle au fer à braser pour augmenter le volume de crème et par conséquent la hauteur.

L'avantage d'utiliser un matériau de brasage pour former les éléments tridimensionnels de protection est que la température nécessaire pour qu'il s'assemble avec le support et forme l'élément tridimensionnel est inférieure à la température de fusion du support mais également à celle du connecteur de carte à mémoire. Une dégradation du connecteur de carte à mémoire est donc évitée car lors du passage en refusion seule la pâte à braser atteint sa température de fusion, celle du composant n'étant pas atteinte.

Un tel passage en refusion fait perdre du volume à la pâte à braser telle que représentée à la figure 5B. On obtient donc après passage en refusion un élément tridimensionnel dont la section selon la hauteur du support (53) a la forme d'un disque (55) à méplat (54) dont le méplat (54) repose sur la plage du support.

Il est à noter qu'une trop grande largeur de dépôt ne respectant pas le rapport recommandé selon lequel la largeur de dépôt L_{DEP} du matériau de brasage est environ trois fois plus grande que la largeur Lₒ de l'ouverture définissant la zone de dépôt générerait des billes conductrices qui ne seraient pas soudées au support et donc dépourvues de fonction protectrice.

On obtient donc un élément tridimensionnel 55 dont la hauteur H est comprise par exemple entre 0,2mm et 0,3mm pour une largeur de dépôt L_{DEP} du matériau de brasage égale à 3mm et une largeur L_{O} de la plage du support recouverte par l'élément tridimensionnel obtenu après le passage en refusion de 1mm. La largeur Lₒ de la plage du support est donc égale à la largeur de la surface de l'élément tridimensionnel reposant sur le support (53). Cette hauteur du même ordre que celle d'un composant électronique joue donc le rôle de mur de protection.

Il est à noter que les éléments tridimensionnels de protection d'un support sont également aptes à protéger les composants 14 d'une architecture classique telle que celle représentée selon la figure 1.

## Revendications

1. Assemblage (390) de lecture de carte à mémoire, comprenant au moins un corps (3900) de lecteur de carte à mémoire et un support (38), ledit support (38) comprenant au moins un connecteur (22) de carte à mémoire à protéger (21) et au moins un élément tridimensionnel (34, 35, 36) de hauteur au moins égale à la hauteur du connecteur (22) de carte à mémoire à protéger, ledit élément tridimensionnel (34, 35, 36) étant disposé latéralement au regard dudit au moins un connecteur (22) de carte à mémoire à protéger (21), formant une protection physique après assemblage dudit support (38) avec le corps (3900) du lecteur de carte à mémoire, **caractérisé en ce que** ledit élément tridimensionnel (34, 35, 36) est principalement constitué d'un matériau de brasage (51).

2. Assemblage selon la revendication 1, **caractérisé en ce qu'**une section dudit élément tridimensionnel (34, 35, 36) selon la hauteur dudit support a la forme d'un disque (55) à méplat (54) dont le méplat (54) repose sur ledit support.

3. Assemblage selon l'une quelconque des revendications précédentes, **caractérisé en ce que** la hauteur H dudit élément tridimensionnel est au moins égale à 0,2mm.

4. Assemblage selon l'une quelconque des revendications précédentes, **caractérisé en ce que** ledit élément tridimensionnel (36) forme une ligne brisée de sorte à protéger au moins deux côtés dudit au moins un connecteur (22) de carte à mémoire à protéger.

5. Procédé de fabrication d'un assemblage (390) de lecture de carte à mémoire, comprenant au moins un corps (3900) de lecteur de carte à mémoire et un support (38), ledit support comprenant au moins un connecteur (22) de carte à mémoire à protéger, **caractérisé en ce que** ledit procédé de fabrication du terminal (390) comprend les étapes successives suivantes :
- dépôt (42) d'un matériau de brasage (51) sur une surface de dépôt dudit support (38),
- formation (443) d'au moins un élément tridimensionnel de hauteur au moins égale à la hauteur du connecteur (22) de la carte à mémoire à protéger (21) par passage en refusion dudit matériau de brasage déposé ;
- formation de l'assemblage (390) de lecture de carte à mémoire avec le corps (3900) de lecteur de carte à mémoire et le support (38) comprenant le connecteur (22) de carte à mémoire à protéger (21).

6. Procédé de fabrication selon la revendication 5, **caractérisé en ce qu'**il comprend une étape de réglage (410) de ladite hauteur dudit au moins un élément tridimensionnel.

7. Procédé de fabrication selon les revendications 5 ou 6, **caractérisé en ce que** le rapport R entre la largeur L_{DEP} de ladite surface de dépôt dudit matériau de brasage et la largeur L_{O} dudit élément tridimensionnel est tel que 2<R<4.

## Patentansprüche

1. Anordnung (390) zum Lesen von Speicherkarten, umfassend mindestens einen Speicherkartenlesekörper (3900) und einen Träger (38), wobei der Träger (38) mindestens einen zu schützenden (21) Speicherkartenanschluss (22) und mindestens ein dreidimensionales Element (34, 35, 36) von einer Höhe, die mindestens gleich der Höhe des zu schützenden (21) Speicherkartenanschlusses (22) ist, aufweist, wobei das dreidimensionale Element (34, 35, 36), das seitlich in Bezug auf den mindestens einen zu schützenden (21) Speicherkartenanschluss (22) angeordnet ist, einen physischen Schutz nach dem Zusammenfügen des Trägers (38) mit dem Speicherkartenlesekörper (3900) bildet, **dadurch gekennzeichnet, dass** das dreidimensionale Element (34, 35, 36) hauptsächlich aus einem Lötmaterial (51) besteht.

2. Anordnung nach Anspruch 1, **dadurch gekennzeichnet, dass** ein Abschnitt des dreidimensionalen Elements (34, 35, 36) entlang der Höhe des Trägers die Form einer Scheibe (55) mit einer Abflachung (54) aufweist, deren Abflachung (54) auf dem Träger ruht.

3. Anordnung nach einem der vorhergehenden Ansprüche, **dadurch gekennzeichnet, dass** die Höhe H des dreidimensionalen Elements mindestens 0,2 mm beträgt.

4. Anordnung nach einem der vorhergehenden Ansprüche, **dadurch gekennzeichnet, dass** das dreidimensionale Element (36) eine unterbrochene Linie derart bildet, um mindestens zwei Seiten des mindestens eines Anschlusses (22) der zu schützenden Speicherkarte zu schützen.

5. Verfahren zum Herstellen einer Anordnung (390) zum Lesen von Speicherkarten, umfassend mindestens einen Speicherkartenlesekörper (3900) und einen Träger (38), wobei der Träger mindestens einen zu schützenden Speicherkartenanschluss (22) aufweist, **dadurch gekennzeichnet, dass** das Verfahren zum Herstellen des Endgerätes (390) die folgenden Schritte aufweist:
- Aufbringen (42) eines Lötmaterials (51) auf einer Aufbringfläche des Trägers (38),
- Bilden (443) von mindestens einem dreidimensionalen Element von einer Höhe, die mindestens gleich der Höhe des zu schützenden (21) Speicherkartenanschlusses (22) ist, durch Umschmelzen des aufgebrachten Lötmaterials,
- Bilden der Anordnung (390) zum Lesen von Speicherkarten mit dem Speicherkartenlesekörper (3900) und dem Träger (38), umfassend den zu schützenden (21) Speicherkartenanschluss (22).

6. Verfahren zum Herstellen nach Anspruch 5, **dadurch gekennzeichnet, dass** es einen Schritt des Einstellens (410) der Höhe des mindestens einen dreidimensionalen Elements aufweist.

7. Verfahren zum Herstellen nach Anspruch 5 oder 6, **dadurch gekennzeichnet**, das Verhältnis R zwischen der Breite L_{DEP} der Aufbringfläche des Lötmaterials und der Breite Lₒ des dreidimensionalen Elements derart ist, dass 2<R<4 ist.

## Claims

1. Assembly (390) of memory card reader, comprising at least one body (3900) of memory card reader and a support (38), said support (38) comprising at least one connector (22) of memory card to be protected (21) and at least one three-dimensional element (34, 35, 36) with a height at least equal to the height of the connector (22) of memory card to be protected, said three-dimensional element (34, 35, 36) being disposed laterally relative to said at least one connector (22) of memory card to be protected (21), forming a physical protection after assembly of said support (38) with the body (3900) of the memory card reader, **characterised in that** said three-dimensional element (34, 35, 36) is mainly made of a brazing material (51).

2. Assembly according to claim 1, **characterised in that** a section of said three-dimensional element (34, 35, 36) along the height of said support, is shaped in the form of a disc (55) with a flat portion (54), the flat portion (54) of which rests on said support.

3. Assembly according to any one of the preceding claims, **characterised in that** the height H of said three-dimensional element is at least equal to 0.2 mm.

4. Assembly according to any one of the preceding claims, **characterised in that** said three-dimensional element (36) forms a broken line so as to protect at least two sides of said at least one connector (22) of memory card to be protected.

5. Method for manufacturing an assembly (390) for reading memory card, comprising at least one body (3900) of memory card reader and a support (38), said support comprising at least one connector (22) of memory card to be protected, **characterised in that** said method for manufacturing a terminal (390) comprises the following successive steps:
- depositing (42) a brazing material (51) on a deposition surface of said support (38),
- forming (443) at least one three-dimensional element, with a height at least equal to the height of the connector (22) of memory card to be protected (21), by reflow of said deposited brazing material;
- forming the assembly (390) for reading memory card with the body (3900) of the memory card reader and the support (38) comprising the connector (22) of memory card to be protected (21).

6. Method for manufacturing according to claim 5, **characterised in that** it comprises a step (410) for adjusting said height of said at least one three-dimensional element.

7. Method for manufacturing according to claims 5 or 6, **characterised in that** the ratio R between the width L_{DEP} of said surface for depositing said brazing material and the width Lₒ of said three-dimensional element is 2<R<4.
